(19) Europäisches Patentamt
European Patent Office
Office européen des brevets

(11) **EP 1 072 870 B1**

(12) **EUROPEAN PATENT SPECIFICATION**

(45) Date of publication and mention
of the grant of the patent:
**29.09.2010 Bulletin 2010/39**

(51) Int Cl.:
***G01F 23/26*** *(2006.01)*

(21) Application number: **00202580.7**

(22) Date of filing: **18.07.2000**

(54) **A capacitive sensor for water level measurement in an oil tank**

Kapazitiver Sensor für Wasserstandsmessung in einem ölbehälter

Détecteur capacitif pour mesure du niveau de l'eau dans un réservoir d'huile

(84) Designated Contracting States:
**BE DE FR NL**

(30) Priority: **29.07.1999 NL 1012743**

(43) Date of publication of application:
**31.01.2001 Bulletin 2001/05**

(73) Proprietor: **Enraf B.V.**
**2624 BD Delft (NL)**

(72) Inventor: **Toth, Ferencz Nandor**
**2612 AX Delft (NL)**

(74) Representative: **Valkonet, Rutger et al**
**Algemeen Octrooi- en Merkenbureau**
**P.O. Box 645**
**5600 AP Eindhoven (NL)**

(56) References cited:
**EP-A- 0 644 432     US-A- 5 049 878**
**US-A- 5 341 673     US-A- 5 838 241**

**Description**

The invention relates to a capacitive measuring instrument for water level measurement in an oil tank according to the preamble of claim 1.

Capacitive sensors for measuring the water level in oil tanks are known, for example from US-A1-5,049,878 and inter alia in the following two embodiments.

A first embodiment of such a capacitive sensor comprises two electrodes which are electrically insulated from the water. The water itself is on earth potential. The electrodes form a sensor capacitor and are both "floating" now. The capacitance of the sensor capacitor, that is, of the two electrodes relative to each other, can be measured by a measuring instrument which employs so-called "two port measurement". These electrodes can for example be realised by means of two separate metal tubes, which are coated with an insulator, for example PTFE or another plastic. The electrodes can also be realised in the form of two mutually insulated semi-tubes, which jointly form a tube and which are coated with an insulator. In all of the above cases the contribution to the overall capacitance of the part of the electrodes that is submerged below the water surface will be zero. Provided the insulating coating is sufficiently thin and the electrodes are sufficiently long and disposed perpendicularly to the water surface, the capacitance decrease of the sensor capacitor will be approximately proportional to the increase in the water level, and vice versa, in that case.

A second embodiment consists of a single electrode, which is electrically insulated from the water. The water itself is at earth potential. In this embodiment the water forms the second electrode of the capacitive sensor. Only one electrode is "floating" in this embodiment. The capacitance must therefore be measured by an instrument which employs so-called "one port measurement". The electrode is for example formed by a single tube which is coated with an insulator, for example PTFE or another plastic, which is present in the water as well as in the oil. The capacitance which is measured in that case is made up of the tube as the one electrode and the water as the other electrode, with the insulator acting as a dielectric. Ideally, the capacitance is proportional to the height of the water level in that case.

For accurate uses the versions of the former embodiment are to be preferred. The reason for this is the fact that it is possible to prevent a parasitic offset capacitance in parallel with the capacitance of the sensor capacitor, the sensor capacitance, by using a shielded cable for the connection of the electrodes. The additional parasitic capacities provided by the shielded cable are not measured as well in the "two port measurement".

For less accurate uses, and in connection with the lower costs, versions of the latter above-described embodiment are often used. A problem therewith is the parasitic capacitance between various parts of the measuring apparatus and earth, in particular between the connecting cable of the "floating" electrode and earth, or, if used, between the earthed shield of the connecting cable and earth. A second parasitic capacitance is formed by the input capacitance of the measuring instrument. Said parasitic capacitances are electrically connected in parallel to the sensor capacitance, and in case of a full scale they may be larger than the sensor capacitance by as much as a factor ten. Taken together in a parallel circuit they form a so-called offset capacitance.

A frequently used method for eliminating said large offset capacitance is the once-only measurement of the zero point. This zero point is then subtracted from the measuring result (called zeroing) upon following measurements. In view of the magnitude of the offset capacitance, changes in the ambient temperature or in the lay-out of the installation can easily lead to major measuring errors (in the aforesaid case of a factor ten, a change of 0,1% in the offset capacitance results in a measuring error of 1 %).

A less frequently used method, which is to be preferred, however, for eliminating said large offset capacitance is the use of a shield of the connecting cable without connecting this shield to earth potential. Instead, an output of a buffer amplifier is changed to the same potential as the "floating" electrode. This technique is known as "active guard". The fact is that the operation of the "one port measurement" used herein is based on changing the electric potential of the "floating" electrode and measuring the electric charge that is required for that purpose, either directly or by measurement of the electric current that is used for that purpose. In case of an "active guard" the current that is required for changing the potential of the shield is supplied by the buffer amplifier, and consequently it is not measured as well upon determination of the sensor capacitance. This method has two significant drawbacks. In the first place, the capacitance of the output of the buffer amplifier and the input capacitance of the measuring instrument are in parallel with the capacitance of the sensor capacitor, and zeroing will have to take place in this case as well. In the second place, the buffer amplifier must be sufficiently wide-band to ensure proper operation. This involves a larger power consumption. In addition, the above requirements lead to a fairly complex electronic circuit and a relatively high cost price.

A well-known variant of the "one port measurement" is the non-simultaneous controlling of the electrode voltage and measuring of the accompanying charge change. These measurements are carried out consecutively in time in that case. This method is known as the "charge/discharge" method. To that end, a voltage change is effected on the sensor capacitor (the "charge" phase). In a next phase this voltage change is eliminated (for example by short-circuiting) and the accompanying charge change is measured (the "discharge" phase). One advantage of this method is, among other things, the low cost price. In addition, the "charge/discharge" method can be combined with the "active guard" technique in an elegant and well-known manner. When the sensor capacitor is charged and discharged to fixed voltage levels, the "active guard" can simply be switched to the same potentials by means of electronic switches. It is not necessary in that case for the shield potential to follow the sensor capacitance potential at any moment. Said two potentials only need to be the same at the ends of the "charge" and "discharge" phases. This combination offers all the advantages of the "active guard" technique at a significantly lower power consumption, since it is not necessary to use a wide-band buffer amplifier. One drawback that remains, however, is the fact that the input capacitance of the measuring amplifier, which is required in the "discharge" phase for measuring the charge change, is still connected in parallel to the sensor capacitance and thus forms an offset capacitance.

Various methods are known per se for the final determination of the sensor capacitance from the measurements that have been made. In one method, the sensor capacitance is incorporated in an oscillation circuit whose period (or frequency) is proportional to the sensor capacitance: $Tx = K1 * Cx + K2$, wherein Tx is the period, Cx is the sensor capacitance and K1 and K2 are constants. K1 and K2 are possibly time and temperature dependent. In order to eliminate said constants K1 and K2, an offset measurement (wherein K1 is assumed to equal 1) or a reference measurement (wherein K2 is assumed to equal 0) is frequently carried out. A well-known method measures the offset K2, by removing Cx from the oscillation circuit, so that $Toff = K2$, as well as the gain K1, by substituting Cx for a capacitance of a known value Cref, so that $Tref = K1 * Cref + K2$. This can be carried out with electronic switches, in such a manner that no changes will occur in K1 and K2 during the measurements. The measuring result is now $/ (Tref - Toff) = Cx / Cref$, from which all unknown factors, with the exception of Cx, have been eliminated. This method is known as the "3 signal method" or as "autocalibration".

The object of the invention is to provide a capacitive sensor which exhibits none of the above drawbacks.

A capacitive sensor according to the invention is to that end characterised in that a charge-controlled oscillator is present in the connection that has been made between the electrode and at least one of the potential sources.

This makes it possible to use the "3 signal method" in combination with the "charge/discharge" method, without a measuring amplifier having an input capacitance which is connected in parallel to the sensor capacitance being present in the "discharge" phase.

The charge-controlled oscillator has a transfer $K1' * Q + K2$, wherein Q is the charge which is released during the "discharge" phase from the sensor capacitance to be measured. When the voltage across the sensor capacitor has changed during the "charge" phase with a voltage difference DeltaV, the amount of charge associated therewith will equal $Q = C * DeltaV$. The resulting transfer will again be $= K1 * C + K2$ in that case. The three measurements of the "3 signal method" are successively Cx + Coff, Cref + Coff and Coff, so that eventually Cx / Cref is obtained as the measuring result.

The advantages of this way of measuring the sensor capacitance include a higher accuracy, due to the absence of a parasitic input capacitance of a measuring amplifier, elimination of other parasitic capacitances by means of an "active guard", elimination of offset and gain errors by "autocalibration", the fact that no buffer amplifier is used, the possibility to use inexpensive CMOS components, a low power consumption, the fact that "charge/discharge" is easier to carry out with block-shaped signals than with sinusoidal signals, and the fact that in many cases no A/D converter is required because the output signals of the charge-controlled oscillator can be connected directly to most microcontrollers, which can also control the measuring cycle and carry out the required computations in that case.

The invention will now be explained in more detail with reference to the accompanying drawings.

In the drawings:

Figure 1 shows a capacitive sensor present in an oil tank;
Figure 2 is an equivalent-circuit diagram of the circuit of Figure 1 for carrying out a "one port measurement";
Figure 3 shows a circuit as used in the invention for carrying out the "charge/discharge" method;
Figure 4 shows an embodiment of a charge-controlled oscillator;
Figure 5 shows an embodiment of a circuit for the "charge/discharge" method comprising a charge-controlled oscillator as used in the invention; and
Figure 6 shows a time diagram associated with the charging and discharging of the sensor capacitor.

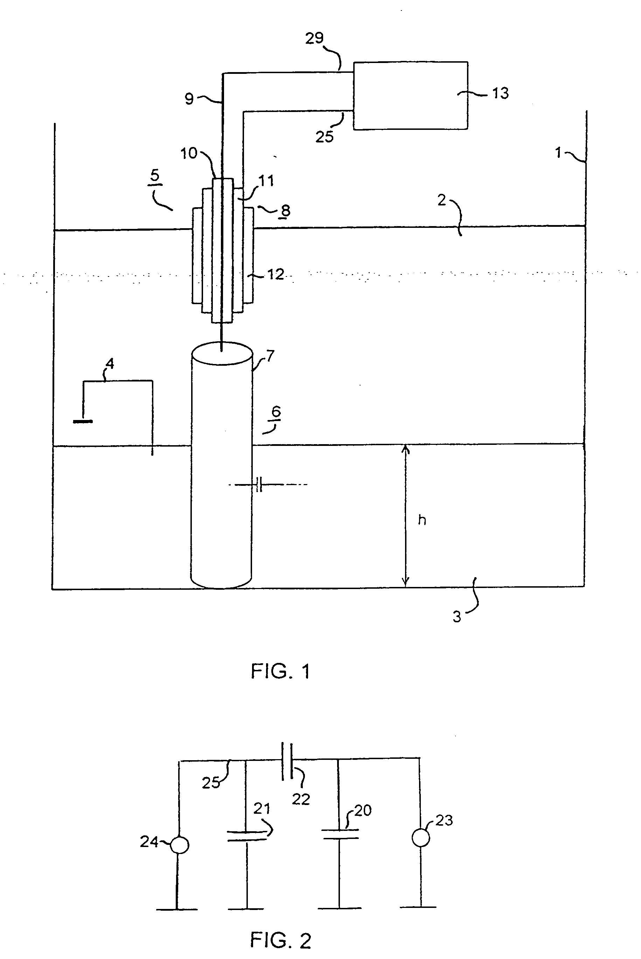

In Figure 1, numeral 1 indicates an oil tank filled with oil 2. A layer of water 3 is present at the bottom of the tank. The water is earthed by means of a line 4. A capacitive sensor 5 is disposed in the tank. The capacitive sensor 5 comprises a tubular electrode 6, which is coated with a thin layer of insulating material 7, as a result of which no galvanic contact is possible between the electrode and the water 3 and/or the oil 2. Tube 6 is galvanically connected to the inner conductor 9 in a shielded cable 8. The shielded cable 8 furthermore comprises an insulator 10, a shield 11 and a protective sheath 12. The shielded cable 8 is connected to a measuring unit 13. Depending on the selected mode of measuring, shield 11 is connected to earth (regular "one port measurement") or to the output of a buffer amplifier (not shown in Figure 1) ("one port measurement" with "active guard").

Figure 2 shows the relevant part of the equivalent-circuit diagram of the circuit that is shown in Figure 1. In the figure, numeral 20 represents the capacitor that is formed by tube 6, insulator 7 and water 3. The capacitance of said capacitor is the capacitance of interest and is a measure for the height h of the water 3 in oil tank 1. The equivalent-circuit diagram furthermore shows a capacitor 21 which represents the external cable capacitance between the shielded cable and the other parts of the oil tank. A capacitor 22 represents the internal cable capacitance between the inner conductor and the shield. Numeral 23 indicates an AC measuring voltage source which delivers an AC voltage signal Vm. An AC voltage source 24 may be connected between terminal connecting point 25 and earth. If no AC voltage source 24 is connected, the measurement of the capacitance of the capacitor 20 takes place via "one port measurement". If an AC voltage source 24 is connected, said source will deliver a voltage Vg which equals the voltage Vm delivered by the AC voltage source 23. In that case the measurement is a "one port measurement" with an "active guard". The measurement of the capacitance of capacitor 20, the sensor capacitance, takes place by measuring the current Im that flows through capacitor 20 as a result of the voltage Vm.

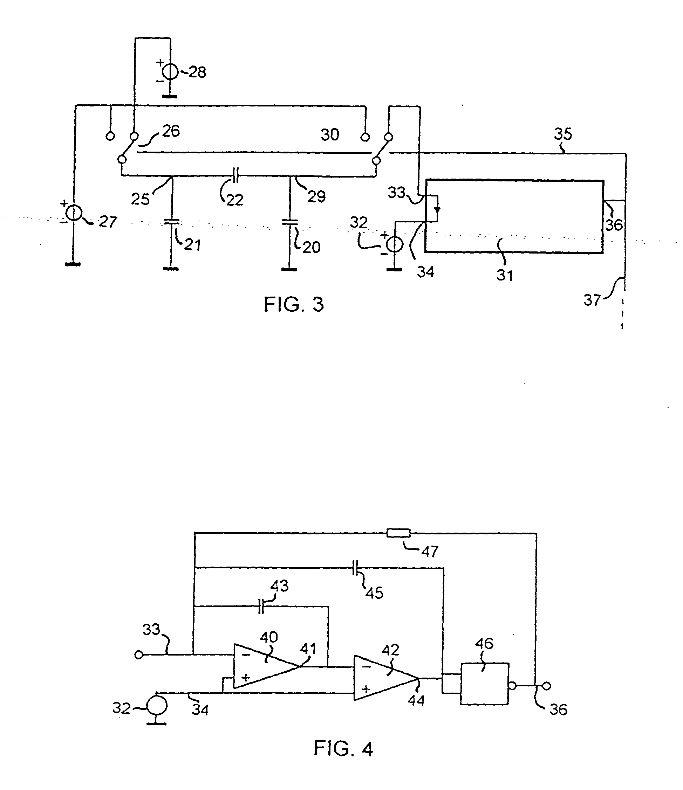

Figure 3 shows the capacitors 20, 21 and 22 and terminal connecting point 25 that have already been discussed with reference to Figure 2. Connected to terminal connecting point 25 is a switch 26 for alternately connecting point 25 to a DC voltage source 27 and a DC voltage source 28. Point 29 is likewise connected to a switch 30. Switch 30 alternately connects point 29 to DC voltage source 27 and to an input 33 of a charge-controlled oscillator 31. Another input 34 of charge-controlled oscillator 31 is connected to a voltage source 32. Switches 26 and 30 are preferably electronically actuated electronic switches, but they may also be mechanical switches which are preferably actuated electronically, but they may also be actuated mechanically. Voltage sources 28 and 32 supply the same DC voltage. The charge-controlled oscillator 31 is so connected that a charge that flows through input 33 will also flow through input 34. Switches 26 and 30 are actuated via a line 35 which is connected to an output 36 of charge-controlled oscillator 31. The control voltage for switches 26 and 30 also forms the output signal of the charge-controlled oscillator. The period time of said output signal is a measure for the amount of charge that has flown through inputs 33 and 34. The output signal can be carried to a processing installation (not shown) for further processing via a line 37.

The operation of the circuit of Figure 3 is as follows. In a first phase, switches 26 and 30 are in the "charge" position, in which position points 25 and 29 are connected to voltage source 27. As a result, sensor capacitor 20 and external cable capacitor 21 are both charged to the DC voltage on voltage source 27. In a subsequent second phase, point 25 is connected to voltage source 28 and sensor capacitor 20 is connected to voltage source 32 via the charge-controlled oscillator 31. Note that point 25 is connected to a voltage source which has the same value as the voltage source to which sensor capacitor 20 is connected. The measurement is an "active guard" measurement, therefore. That state continues to exist until no charge flows from capacitor 20 through inputs 33 and 34 to voltage source 32 any more. The duration of that period is proportional to the amount of charge that has flown through. After the through-flow of charge has stopped or decreased below a predetermined or preset value, switches 26 and 30 are actuated to reconnect the sensor capacitor and the external cable capacitor to the voltage source 27 and to recharge them to the voltage delivered by voltage source 27. The above pattern is then repeated again, from connecting to respective voltage sources 28 and 32 and maintaining that state until again no charge flows from sensor capacitor 20 to voltage source 32 any more. The period time T of this circuit is related to the amount of charge Q that flows from sensor capacitor 20 to voltage source 32 during the "discharge" phase according to formula $= K1 * Q + K2.$

Figure 4 shows an example of a charge-controlled oscillator. The non-inverting input of a first operational amplifier 40 is connected to a source of constant voltage, such as voltage source 32, via input 34 (see Figure 3). The inverting input of operational amplifier 40 is connected to input 33. Output 41 of operational amplifier 40 is connected to the inverting input of a second operational amplifier 42. The non-inverting input of the operational amplifier 42 is connected to the constant voltage source, such as voltage source 32, via input 34. Output 41 is also connected, via a capacitor 43, to the inverting input of operational amplifier 40. An output 44 of operational amplifier 42 is also connected, via a capacitor 45, to the inverting input of operational amplifier 40. The output 44 is also connected to the two inputs of a NAND gate 46. The output of the NAND gate 46 is connected, via a resistor 46, to the inverting input of the operational amplifier 40. The period time of this circuit is directly proportional to the amount of charge that is required in the case of a voltage difference between point 29 and input 34 in order to effect the same potential on point 29 as on input 34. The output signal that is generated on output 36 as a result is a block-shaped signal. The control signals for switches 26 and 30 are either the signals on output 36 or an inverted version thereof. Furthermore another circuit (not shown) may be present between output 36 and switches 26 and 30 in order to give the signals the shape that is desirable and suitable for actuating the switches and any other electronic components that may be connected to output 36.

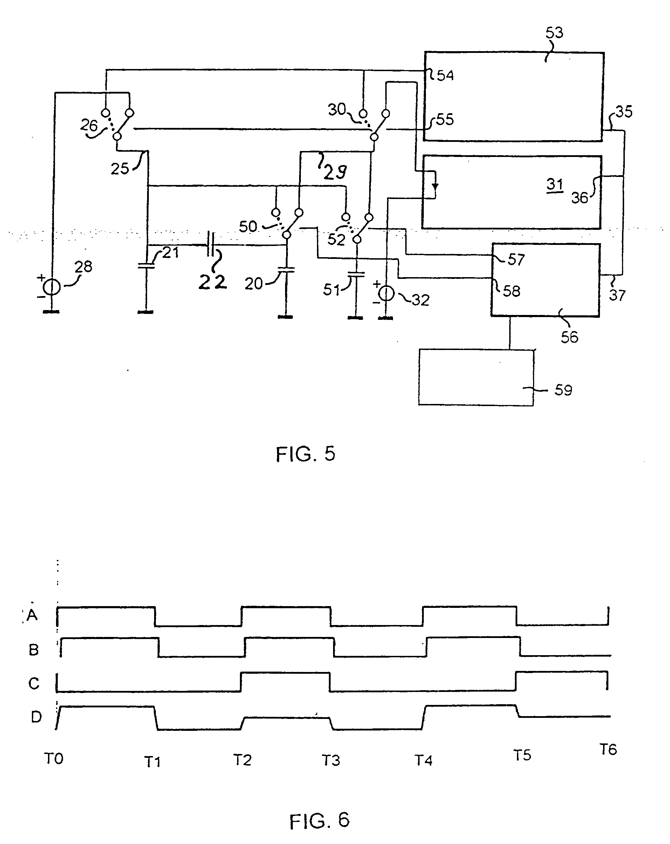

One version of a circuit for use in the invention, wherein the advantages of a "3 signal method" or "autocalibration" can be utilized is shown in Figure 5. Elements that have already been designated with reference to Figure 3 are indicated by the same numerals in this figure. Sensor capacitor 20 can now be connected, via a switch 50, either to point 25 or to point 29. The circuit furthermore includes a reference capacitor 20, which can be connected via a switch 52 and also sensor capacitor 20 either to point 25 or to point 29. Output 36 of charge-controlled oscillator 31 is connected via line 35 to a control circuit 53 for switches 26 and 30. Control circuit 53 also generates a charging voltage Vo on output 54. Charging voltage Vo is actually nothing else but the voltage generated by voltage source 27 in Figure 3. Control circuit 53 generates control signals for switches 26 and 30 on output 55. Output 36 of the charge-controlled oscillator 31 is connected to a microcontroller 56 via line 37. Outputs 57 and 58 of microcontroller 56 are connected to switch 50 and switch 52, respectively.

The operation of the circuit according to Figure 5 is as follows, with reference also being made to Figure 6. During a first measuring period the switches 26, 30 and 52 are in the position which is illustrated in the dotted line in Figure 5, and switch 50 is in the position which is illustrated in the full line. In this state the circuit is actually identical to the circuit which is shown in Figure 3. In that situation a block-shaped or other simply digitized signal, such as a triangular voltage or a saw-tooth voltage, is generated on output 36. The signal on output 36 controls, via control circuit 53, switches 26 and 30 at the rate which is dictated by the period of the output signal on output 36. The output signal on output 36 is also fed, via line 37, to microcontroller 56 and processed there.

This results in measurement of the sum of the sensor capacitance and other capacitances. The other capacitances are summed up under the denominator offset capacitance Co. One period Tx of the output signal on output 36

equals `K1 * (Cx + Co) + K2.`

During a second measuring period switch 50 is in the position which is illustrated in the dotted line and switch 52 is in the position which is illustrated in the full line. This results in a signal on output 36 which has a period Tr that

equals `K1 * (Cr + Co) + K2.`

Finally, during a third measuring period both switch 50 and switch 52 are put in the positions illustrated in the dotted line. In that situation only the offset capacitance still plays a role in the determining of the period of the output signal on output 36 according to the formula `To = K1 * (Co) + K2.`

From the above three equations the value of the capacitance Cx of the sensor capacitor can be simply determined

as = `Cr ((Tx - To) / (Tr - To)),` wherein Tx is the period of the output signal of output 36 during the first measuring period, Tr is the period during the second measuring period and To is the period during the third measuring period. The result of this calculation is processed by microcontroller 56 into a signal which indicates the value of the height h of the water layer 3 on a display unit 59.

A special measuring method is one wherein switches 26 and 30 are not controlled simultaneously with the output signal on output 36 in order to switch at the same rate between two possible positions of said switches. To that end the control circuit 53 includes electronics which ensure that a new switching sequence (period T5 - T6) will not take place (see line C in Figure 6) before a full period (periods T0 - T2 and T3 - T5) of the output signal on output 36 (see line A in Figure 6) has elapsed after a preceding switching sequence (period T2 - T3). In each case times T0, . . . , T6 are apart by half a period of the output signal on output 36. Control circuit 53 is so configured that output 54 alternates between a low voltage, such as a zero voltage GND, and a high voltage, such as the full supply voltage Vcc. By controlling switches 26 and 30 in this manner, points 25 and 29 are connected to GND one time when switches 26 and 30 are in the position shown in the dotted line, and the next time they are connected to Vcc. By selecting a voltage source 32 having a voltage between GND and Vcc, for example 1/2Vcc, charging to GND takes place between T1 and T2 and discharging to 1/2Vcc takes place between T2 and T3, after which charging takes place again between T4 and 15, albeit to Vcc in this case, after which discharging to 1/2Vcc takes place again between T5 and T6. This is shown in line D in Figure 6. This mode of operation enables a strong suppression of additional charge that reaches the input of the measuring system from a low-frequency voltage source via a parasitic capacitance, such as 50 or 60 Hz coupling from the electric mains.

**Claims**

1.  A capacitive measuring instrument for water level measurement in an oil tank (1), wherein the water is earthed, comprising a measuring unit (13) and a capacitive sensor (5) having an insulated electrode (9), wherein a shielded cable (8) for the electrode (9) is operatively connected to said measuring unit (13), said measuring unit comprising at least two different potential sources (28; 32), as well as switches (26; 30) for alternately connecting the electrode (9) with respectively one of at least two different potential sources (28; 32) and the shield (11) with respectively one of at least two different potential (28; 32) sources, such that the shield (11) and the electrode (9) are simultanuously connected to equal potentials, **characterised in that** the capacitive measuring unit (13) further comprises a charge-controlled oscillator (31) operatively connected with the electrode (9) and at least one of the potential sources (32).

2. A capacitive measuring instrument according to claim 1, **characterised in that** the capacitive measuring unit (13) further comprises a third potential source (27) alternately connected with the shield (11) and the electrode (9) via said switches (26; 30).

3. A capacitive measuring instrument according to claim 2, **characterised in that** the said three potential sources (27; 28; 32) have three different potential values, and that said charge-controlled oscillator (31) is operatively connected with the electrode (9) and one of said three potential sources (32) having neither the highest nor the lowest potential value.

4. A capacitive measuring instrument according to claim 1, 2 or 3, **characterised in that** a microcontroller (56) is connected to an output (36; 37) of the charge-controlled oscillator (31), on which output the oscillator signal is present.

5. A capacitive measuring instrument according to claim 4, **characterised in that** one output of said microcontroller (56) is connected to a display unit (59).

6. A capacitive measuring instrument according to claim 5, **characterised in that** said display unit is adapted for displaying the height of the water level.

**Patentansprüche**

1. Kapazitives Messinstrument zur Wasserstandsmessung in einem Öltank (1), bei dem das Wasser geerdet ist, mit einer Messeinheit (13) und einem kapazitiven Sensor (5), der eine isolierte Elektrode (9) aufweist, wobei ein abgeschirmtes Kabel (8) für die Elektrode (9) mit der Messeinheit (13) in Wirkverbindung steht, wobei die Messeinheit wenigstens zwei verschiedene Potentialquellen (28; 32) sowie Schalter (26; 30) aufweist, um die Elektrode (9) abwechselnd mit jeweils einer von wenigstens zwei verschiedenen Potentialquellen (28; 32) und die Abschirmung (11) mit jeweils einer von wenigstens zwei verschiedenen Potentialquellen (28; 32) so zu verbinden, dass die Abschirmung (11) und die Elektrode (9) gleichzeitig mit gleichen Potentialen verbunden sind, **dadurch gekennzeichnet, dass** die kapazitive Messeinheit (13) ferner einen ladungsgesteuerten Oszillator (31) umfasst, der mit der Elektrode (9) und wenigstens einer der Potentialquellen (32) in Wirkverbindung steht.

2. Kapazitives Messinstrument nach Anspruch 1, **dadurch gekennzeichnet, dass** die kapazitive Messeinheit (13) ferner eine dritte Potentialquelle (27) aufweist, die über die Schalter (26; 30) abwechselnd mit der Abschirmung (11) und der Elektrode (9) verbunden ist.

3. Kapazitives Messinstrument nach Anspruch 2, **dadurch gekennzeichnet, dass** die drei Potentialquellen (27; 28; 32) drei unterschiedliche Potentialwerte haben und dass der ladungsgesteuerte Oszillator (31) mit der Elektrode (9) und einer der drei Potentialquellen (32) in Wirkverbindung steht, die weder den höchsten noch den niedrigsten Potentialwert hat.

4. Kapazitives Messinstrument nach Anspruch 1, 2 oder 3, **dadurch gekennzeichnet, dass** ein Mikrocontroller (56) mit einem Ausgang (36; 37) des ladungsgesteuerten Oszillators (31) verbunden ist, an dem das Oszillatorsignal anliegt.

5. Kapazitives Messinstrument nach Anspruch 4, **dadurch gekennzeichnet, dass** ein Ausgang des Mikrocontrollers (56) mit einer Anzeigeeinheit (59) verbunden ist.

6. Kapazitives Messinstrument nach Anspruch 5, **dadurch gekennzeichnet, dass** die Anzeigeeinheit so eingerichtet ist, dass sie die Höhe des Wasserstands anzeigt.

**Revendications**

1. Instrument de mesure capacitif destiné à mesurer un niveau d'eau dans un réservoir d'huile (1), dans lequel l'eau est mise à la terre, comprenant une unité de mesure (13) et un capteur capacitif (5) qui présente une électrode isolée (9), dans lequel un câble blindé (8) de l'électrode (9) est connecté de manière opérationnelle à ladite unité de mesure (13), ladite unité de mesure comprenant au moins deux sources de potentiel différentes (28 ; 32) ainsi que des commutateurs (26 ; 30) destinés à connecter alternativement l'électrode (9) respectivement à l'une des deux sources de potentiel différentes (28 ; 32) au moins et le blindage (11) respectivement à l'une des deux sources de potentiel différentes (28 ; 32) au moins, de telle sorte que le blindage (11) et l'électrode (9) soient connectés de manière simultanée à des potentiels égaux,

**caractérisé en ce que** l'unité de mesure capacitive (13) comprend en outre un oscillateur commandé en charge (31) connecté de manière opérationnelle à l'électrode (9) et à l'une au moins des sources de potentiel (32).

2. Instrument de mesure capacitif selon la revendication 1, **caractérisé en ce que** l'unité de mesure capacitive (13) comprend en outre une troisième source de potentiel (27) connectée alternativement au blindage (11) et à l'électrode (9) par l'intermédiaire desdits commutateurs (26 ; 30).

3. Instrument de mesure capacitif selon la revendication 2, **caractérisé en ce que** lesdites trois sources de potentiel (27 ; 28 ; 32) présentent trois valeurs de potentiel différentes, et **en ce que** ledit oscillateur commandé en charge (31) est connecté de manière opérationnelle à l'électrode (9) et à l'une desdites trois sources de potentiel (32) qui n'a ni la valeur de potentiel la plus élevée ni la valeur de potentiel la plus basse.

4. Instrument de mesure capacitif selon l'une quelconque des revendications 1, 2 ou 3, **caractérisé en ce qu'**un microcontrôleur (56) est connecté à une sortie (36 ; 37) de l'oscillateur commandé en charge (31), sortie où est présent le signal d'oscillateur.

5. Instrument de mesure capacitif selon la revendication 4, **caractérisé en ce qu'**une sortie dudit microcontrôleur (56) est connectée à une unité d'affichage (59).

6. Instrument de mesure capacitif selon la revendication 5, **caractérisé en ce que** ladite unité d'affichage est adaptée de façon à afficher la hauteur du niveau d'eau.

FIG. 1

FIG. 2

FIG. 3

FIG. 4

EP 1 072 870 B1

FIG. 5

T0   T1   T2   T3   T4   T5   T6

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5049878 A1